# EUROPÄISCHE PATENTANMELDUNG

(11) **EP 0 791 885 A2**
(43) Veröffentlichungstag der Anmeldung: **27.08.1997**
(21) Anmeldenummer: 97102892.3
(22) Anmeldetag: 21.02.1997
(51) Int. Cl.: G06F 17/30, G06F 17/60

(54) **Verfahren zur rechnergestützten Verwaltung mehrerer, in mindestens einem Rechner gespeicherten Dateikopien einer gespeicherten Datei**

(30) Priorität: 26.02.1996 DE 19607134
(71) Anmelder: SIEMENS AKTIENGESELLSCHAFT, 80333 München (DE)
(72) Erfinder: Berger, Michael, D-85635 Höhenkirchen (DE); Völksen, Gerd, 80337 München (DE)

(57) **Zusammenfassung**

Es wird vorgeschlagen, in Informationsräume eingeordnete Datensätze mit einem eigenen Raummanager (RM) zu verwalten. Mit dem Raummanager (RM) kann eine Zugangskontrolle für Änderungsoperationen gewährleistet werden. Weiterhin sind Änderungen an Attributen der Informationsräume (IU) selbst leicht zu überwachen bzw. durchzuführen. Den Informationsräumen (IU) werden hierzu eigene Informationsraum-Protokolldateien (IUPDj) zugeordnet, in denen Änderungen von Datensätzen, die sich in dem jeweiligen Informationsraum (IU) befinden, protokolliert werden.

## Beschreibung

Die Erfindung betrifft ein Verfahren, das in verteilten gemeinsamen Arbeitsumgebungen, sogenannten Groupware-Systemen und sogenannten CSCW-Systemen (Computer Supported Cooperative Work) Anwendung findet. Diese Systeme sind nützlich zur Unterstützung verschiedenster Arten gemeinsamer Arbeit verschiedener Teilnehmer unterschiedlicher Arbeitsgruppen an Rechnern.

CSCW-Systeme können jedoch nur dann effizient eingesetzt werden, wenn sie einen einfachen Übergang zwischen synchroner und asynchroner gekoppelter Zusammenarbeit der verschiedenen Teilnehmer an dem CSCW-System unterstützen.

Gekoppelte Zusammenarbeit zwischen Teilnehmern bedeutet in diesem Zusammenhang, daß alle Nachrichten, die von einem Teilnehmer des CSCW-Systems gesendet werden, an alle anderen Teilnehmer, die zu dem jeweiligen Zeitpunkt in dem CSCW-System eingebunden sind, übermittelt werden.

Dies erfolgt bei der synchronen gekoppelten Zusammenarbeit in Echtzeit. Ist diese Echtzeitbearbeitung, d.h. die Versendung und Empfang der Nachrichten in Echtzeit an alle Teilnehmer bzw. von allen Teilnehmern des CSCW-Systems nicht möglich, bedeutet dies, daß die Teilnehmer in sogenannter asynchroner gekoppelter Zusammenarbeit arbeiten.

Gekoppelte Zusammenarbeit bezieht sich hierbei auf alle Möglichkeiten des elektronischen Datenaustauschs zwischen über Kommunikationsnetze gekoppelten Rechnern. Darunter sind beispielsweise eine Audio/Videokonferenz, sogenanntes Data Sharing oder auch Application Sharing, Electronic Mail oder sogenannte Verteilte Kalender Tools zu verstehen. Diese Auflistung ist jedoch in keiner Weise als abschließend anzusehen.

Als ein sehr einfaches Beispiel kann man sich in diesem Zusammenhang zwei an unterschiedlichen Orten befindendliche Teilnehmer des CSCW-Systems vorstellen, die gemeinsam ein Dokument entwickeln, beispielsweise ein Hilfedokument für ein Softwarewerkzeug. Jeder Teilnehmer entwickelt seinen Teil des Dokuments asynchron, d.h. völlig unabhängig von dem anderen Teilnehmer. Jedoch ist es von Zeit zu Zeit nötig, daß sich diese beiden Teilnehmer miteinander austauschen oder sogar andere Teilnehmer hinzunehmen, um die unabhängige Entwicklung der Teile des Dokuments zu dem Gesamtdokument zusammenzuführen. Hierbei kann beispielsweise das Nutzen einer Videokonferenz und des Application Sharings eine sehr effiziente Methode für eine Unterstützung einer Zusammenführung der Teile des Dokuments zu dem schließlich zu entwickelnden Gesamtdokument sein.

Um jedoch auch mit mobilen und ortsunabhängigen Teilnehmern effektiv zusammenarbeiten zu können, ist es von großer Bedeutung, daß die Arbeitsumgebung, beispielsweise das CSCW-System der Teilnehmer unabhängig ist von einer temporären physikalischen Verbindung der einzelnen Teilnehmer der gemeinsamen Arbeitsumgebung. Hierfür ist es notwendig, einen einfachen Übergang zwischen Phasen der gekoppelten Zusammenarbeit sowie der entkoppelten Zusammenarbeit zu schaffen.

In diesem Zusammenhang ist unter einer entkoppelten Zusammenarbeit die Situation zu verstehen, daß mindestens ein Teilnehmer der gemeinsamen Arbeitsumgebung entweder keine Nachrichten an die anderen Teilnehmer senden kann oder keine Nachrichten von diesen Teilnehmern empfangen kann.

Diese Möglichkeit der entkoppelten Zusammenarbeit, die auch als autonomes Arbeiten bezeichnet wird, verbessert die Zusammenarbeit vor allem in Organisationen, deren Teile der Organisation örtlich verteilt angesiedelt sind, wenn für die Übertragung von Daten hohe Kosten anzusetzen sind, oder das verwendete Netz einer hohen Belastung ausgesetzt ist bzw. sehr fehleranfällig ist.

Beispiele solcher Arbeitsumgebungen sind verteilte Büro-Arbeitsumgebungen und Entwicklungsgruppen, die nach der sogenannten Tele-Heimarbeit arbeiten oder auch verteilte Entwicklungswerkzeuge.

Das Replizieren, also Kopieren gemeinsam zugänglicher Daten ist die Voraussetzung für eine einfache Möglichkeit zur Schaffung eines Übergangs zwischen gekoppelter und entkoppelter Zusammenarbeit ohne eine größere Verzögerung spürbar aufkommen zu lassen. Dies versetzt beispielsweise die Teilnehmer einer gemeinsamen Arbeitsumgebung in die Lage, selbst bei auftretenden Verbindungsfehlern ohne Einschränkungen an der jeweils eigenen Kopie der Daten weiterzuarbeiten.

Wenn die Verbindung mit den anderen Teilnehmern wieder zustandekommt, müssen die während der entkoppelten Phase geänderten Daten wieder zu einer gemeinsamen, konsistenten Datenstruktur zusammengeführt werden. Es ist also ein Abgleich mehrerer unabhängiger, in mindestens einem Rechner gespeicherter Dateikopien einer Datei erforderlich.

Eine Übersicht über verschiedene bekannte Vorgehensweisen zum Abgleich mehrerer unabhängiger Dateikopien ist zu finden in [1].

In [2] wird ein in einem mit dem Namen GINA bezeichneten System verwendetes Verfahren beschrieben. Dies ist ein Verfahren, bei dem den einzelnen Dateikopien Protokolldateien zugeordnet werden. Bei dem Verfahren in GINA werden bei der Bearbeitung der einzelnen Dateikopien während der autonomen Phase unterschiedliche Versionen durch die Ausführung von Änderungsoperationen erzeugt. Auf diese Weise wird in einer Protokolldatei ein sogenannter Baum mit zwei Ästen gebildet. Der Abgleich der Dateikopien wird dann in der Weise vorgenommen, daß einer der Äste an das Ende des anderen Astes angehängt wird. Dabei werden die Operationen, die in dem einen Ast aufgeführt werden, auf der anderen Seite ebenfalls ausgeführt. Dieses Verfahren ist unflexibel. Außerdem werden in diesem Verfahren weder einzelne Konflikte berücksichtigt noch die Reihenfolge der Konfliktbeseitigung.

Dies bedeutet einen unnötigen zusätzlichen Rechenaufwand während des Abgleichs der Daten auf den jeweiligen Rechnern. Weiterhin ist dieses Verfahren nur angegeben für den direkten Abgleich von zwei Dateikopien.

Ein weiteres Verfahren, das in einem als COCOON bezeichneten System verwendet wird, ist in [3] beschrieben. Auch bei diesem Verfahren werden jeweils den Dateikopien zugeordnete Protokolldateien verwendet. Das Verfahren verwendet jedoch eine feste chronologische Reihenfolge zum Abgleich der Dateikopien, in dem es die Protokolldateien von Anfang bis Ende 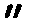 durcharbeitet" und die einzelnen dort aufgeführten Änderungen chronologisch nacheinander abarbeitet. Dieses Verfahren birgt den Nachteil in sich, daß bestimmte Abgleiche durch beschränktes Wissen über Änderungsoperationen in der Protokolldatei unnötigigerweise durchgeführt werden oder sogar später eventuell revidiert werden müssen, beispielsweise Abgleiche von Strukturänderungen von später gelöschten Datensätzen.

Dies bedeutet einen erhöhten Bedarf an Rechenzeit zur Durchführung des in [3] beschriebenen Verfahrens durch einen Rechner.

Alle bekannten Verfahren setzen Datensätze voraus, die in einer Datenbankstruktur miteinander verknüpft sind. Bei allen Verfahren werden Änderungen der Datensätze auf unterster Ebene der Datensätze selbst bzw. den Protokolldateien bearbeitet. Bei diesen Verfahren ist es nicht möglich, eine Zugriffskontrolle für Änderungsoperationen auf einzelne Gruppen von Datensätzen zu realisieren, wodurch diese Systeme einen erheblichen Sicherheitsmangel aufweisen.

Der Erfindung liegt somit das Problem zugrunde, ein Verfahren zum rechnergestützten Verwaltung mehrerer unabhängiger, in mindestens einem Rechner gespeicherten Dateikopien einer Datei anzugeben, mit dem eine sichere Verwaltung der Datensätze möglich wird..

Das Problem wird durch das Verfahren gemäß Patentanspruch 1 gelöst.

Bei dem Verfahren gemäß Patentanspruch 1 werden Datensätze mindestens einem Informationsraum zugeordnet. An dem mindestens einem Informationraum erfolgte Änderungen werden in einer dem jeweiligen Informationsraum zugeordneten Informationsraum-Protokolldatei gespeichert. Die Informationsraum-Protokolldateien werden von einem Raummanager verwaltet, durch den eine Zugangskontrolle von Änderungsoperationen auf Datensätze einzelner Informationsräume realisiert wird.

Weiterbildungen der Erfindung ergeben sich aus den abhängigen Ansprüchen.

In einer Weiterbildung des erfindungsgemäßen Verfahrens werden vorgenommene Änderungen an einer Dateikopie jeweils in einer der jeweiligen Dateikopie zugeordneten Protokolldatei gespeichert. Während des Abgleichs der Dateikopien werden die einzelnen Protokolldateien miteinander verglichen. Die Reihenfolge der untersuchten Änderungsoperationen in den einzelnen Protokolldateien ist bei dem erfindungsgemäßen Verfahren in der Weise festgelegt, daß zu Beginn des Verfahrens alle Löschoperationen (delete) von Datensätzen oder Kreierungsoperationen (create) von Datensätzen der Datei oder den Dateikopien abgeglichen werden.

Erst nachdem alle Löschoperationen oder Kreierungsoperationen in den Protokolldateien berücksichtigt wurden in dem gesamten rechnergestützten Abgleich der Dateikopien, werden andere Operationen, beispielsweise Strukturänderungsoperationen (createLink, deleteLink) oder auch Änderungsoperationen an den eigentlichen Attributen der Datensätze (changeAttribute), durchgeführt.

Werden für die einzelnen Änderungsoperationen zwischen den Protokolldateien Konflikte entdeckt, wenn z.B. eine Löschoperation (delete) in einer ersten Protokolldatei gefunden wurde, diese jedoch nicht in einer zweiten Protokolldatei zu finden ist, wird ein Vorschlag, beispielsweise ein Löschen des Datensatzes in der allgemeinen Datei, den Benutzern zugänglich gemacht. Abhängig davon, ob sich die Benutzer auf einen endgültigen Abgleich einigen können, wird der Vorschlag in einem letzten Schritt in Form einer Änderung der Datei und der Dateikopien entsprechend der Benutzerentscheidung umgesetzt.

In einer weiteren Ausgestaltung des Verfahrens zur Durchführung des Abgleichs der Dateikopien erfolgt nun die Ermittlung der Vorschläge innerhalb der Protokolldateien zuerst auf Basis ganzer Informationsräume, und dann jeweils ausgehend von der Wurzel hierarchisch fortschreitend hin zu den sogenannten Blättern des Datenbaums.

Hierdurch werden wiederum nicht erforderliche Abgleichsoperationen vermieden, da beispielsweise bei einer Einigung über einen Abgleich global für einen ganzen Informationsraum viele Operationen von Änderungen der Datensätze, die sich in diesem Informationsraum befinden, unnötig werden. Damit wird eine erhebliche Rechenzeitersparnis erreicht.

Ferner ist es vorteilhaft, nach Abgleich aller Löschungsoperationen und/oder Kreierungsoperationen alle Strukturveränderungsoperationen abzugleichen und erst dann Operationen zur Änderung einzelner Attribute der Datensätze zu berücksichtigen. Dies führt zu einer weiteren Ersparnis an Rechenzeit bei der Durchführung des erfindungsgemäßen Verfahrens durch einen Rechner.

Weiterhin ist es vorteilhaft, semantische Aspekte der Änderungen der Datensätze zu berücksichtigen, beispielsweise bestimmte Zeiträume, in denen Änderungen stattgefunden haben oder auch die Priorisierung bestimmter Teilnehmer, die Änderungsoperationen durchgeführt haben beim Abgleich der einzelnen Dateikopien.

Ausführungsbeispiele der Erfindung sind in den Figuren dargestellt und werden im folgenden näher erläutert.

Es zeigen:
- Figur 1: ein Ablaufdiagramm, das eine Weiterbildung des Verfahrens gemäß Patentanspruch 1 beschreibt;
- Figur 2: ein Ablaufdiagramm, das eine Weiterbildung des Verfahrens gemäß Patentanspruch 2 beschreibt;
- Figuren 3a und 3b: ein Ablaufdiagramm, das eine Weiterbildung des Verfahrens gemäß gemäß Patentanspruch 1 beschreibt;
- Figuren 4a und 4b: ein Ablaufdiagramm, das das eine Weiterbildung des Verfahrens gemäß Patentanspruch 2 in einzelnen Schritten darstellt;
- Figuren 5a und 5b: in Form einer Skizze eine Darstellung, die die eindeutigen Kennzeichen einzelner Sequenzen abhängig von der Änderung einzelner Teilnehmer in einer Sitzung einer Gruppen-Arbeitsumgebung zu zwei unterschiedlichen Zeitpunkten;
- Figur 6: ein Beispiel einer Datei mit einzelnen Datensätzen, die in Form einer Datenbankstruktur miteinander gekoppelt sind;
- Figur 7: eine Anordnung mehrerer Rechner, mit deren Hilfe die einzelne Dateikopien miteinander abgeglichen werden.
- Figur 8: ein Ablaufdiagramm, das die Verfahrensschritte des Verfahrens gemäß Patentanspruch 1 und 2 beschreibt;

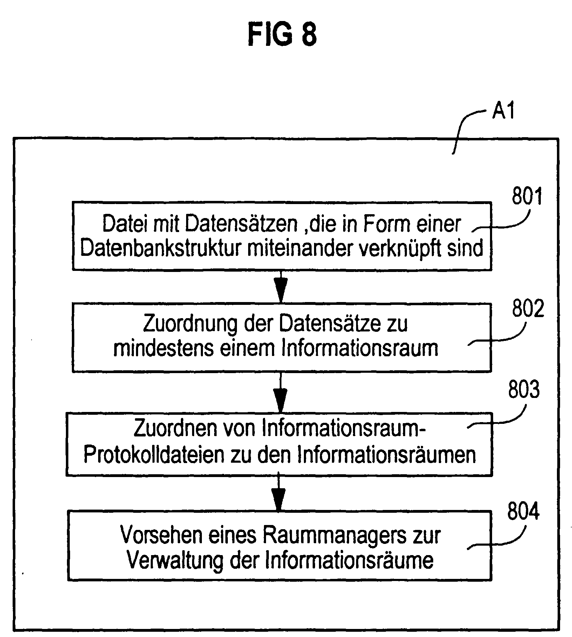

In Figur 8 ist ein Ablaufdiagramm dargestellt, das einzelne Verfahrensschritte eines ersten Ausführungsbeispiels des erfindungsgemäßen Verfahrens beschreibt.

Das Verfahren geht von einer Datei D aus, die Datensätze aufweist, die in Form einer Datenbankstruktur miteinander verknüpft sind 801.

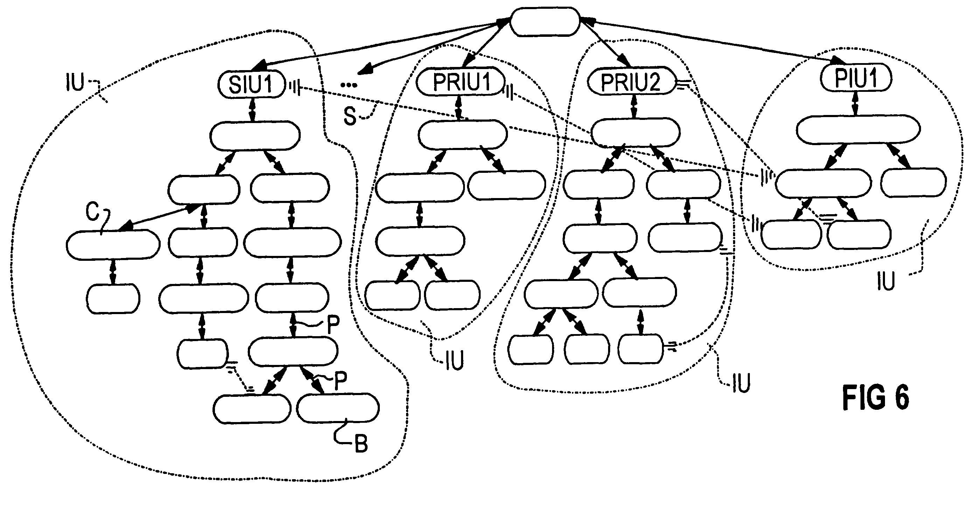

Ein Beispiel einer solchen Datei ist in Figur 6 dargestellt, wobei die einzelnen Verknüpfungen jeweils durch Pfeile zwischen den Datensätzen, die durch Ellipsen dargestellt sind, beschrieben sind. Hierbei sind hierarchische Verknüpfungen zwischen zwei Datensätzen dargestellt durch jeweils einen durchgezogenen Pfeil, durch den eine hierarchische Kopplung P beschrieben wird. Hierarchisch bedeutet in diesem Zusammenhang, daß jeweils ein Objekt einem Elterndatensatz zugeordnet ist.

Weiterhin können Containerdatensätze C in einer dem jeweiligen Datensatz hierarchisch untergeordneten Ebene Kinderdatensätze aufweisen, mit denen der jeweilige Datensatz ebenso über die hierarchische Kopplung P verbunden ist.

Weist die Datei ausschließlich Datensätze auf, die über hierarchische Kopplungen P miteinander verbunden sind, so weist die gesamte Datei eine sogenannte Baumstruktur auf, also eine streng hierarchisch gegliederte Struktur.

Die Datensätze können jedoch auch über Sekundärkopplungen S miteinander verbunden sein. Über die Sekundärkopplungen sind die einzelnen Datensätze über Querverbindungen innerhalb der Baumstruktur verbunden, wodurch die hierarchische Baumstruktur 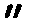 aufgelöst" wird und eine allgemein vernetzte Struktur von Datensätzen entsteht.

In Figur 6 sind einzelne Datensätze, Containerdatensätze C, die hierarchische Kopplungen P zu in der hierarchischen Ordnung unterhalb des jeweiligen Containerdatensatzes C angeordneten Datensätzen aufweisen, dargestellt. Weitere Typen von Datensätzen sind Blattdatensätze B, die innerhalb der Baumstruktur auf der 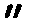 untersten Hierarchieebene" angesiedelt sind und somit abhängig sind von dem jeweiligen Elterndatensatz. Sie weisen nur eine hierarchische Kopplung P zu ihrem jeweiligen Elterndatensatz auf. Dieser Elterndatensatz ist ein Containerdatensatz C.

Einzelne Bereiche der Datensätze kann man, wie im weiteren noch beschrieben wird, in Informationsräume IU einteilen.

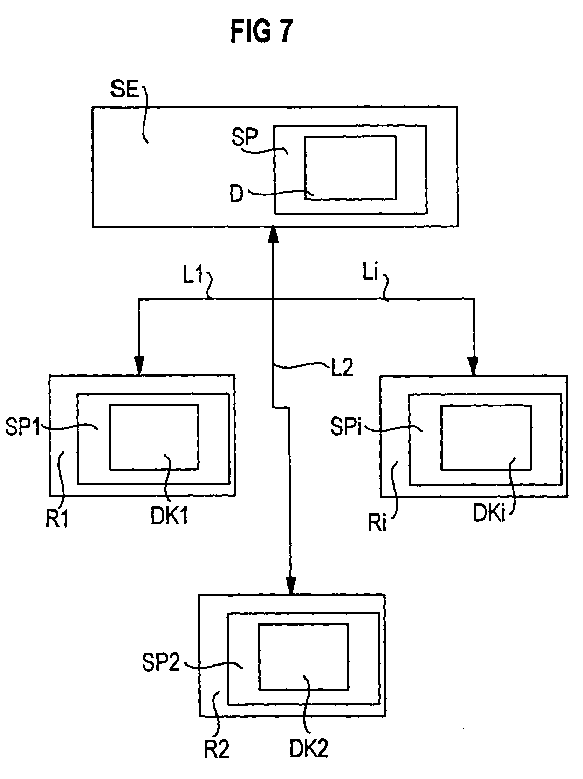

In Figur 7 ist eine Anordnung von verschiedenen Rechnern Ri dargestellt. In diesem speziellen Ausführungsbeispiel wird von einem zentralen Server SE ausgegangen, der einen Speicher SP aufweist, in dem die Datei D gespeichert wird. Diese Rechner Ri, wobei i einen Index bezeichnet, der die einzelnen Rechner Ri eindeutig kennzeichnet und eine beliebige natürliche Zahl ist, sind jeweils über eine Leitung Li mit dem Server SE gekoppelt.

Dieses Beispiel soll nur zur Darstellung der Rahmensituation dienen, in dem das Verfahren angewendet werden kann. Es schränkt jedoch die Allgemeingültigkeit, also die Verwendung des Verfahrens bei Vorhandensein mindestens zweier Rechner Ri ein, die jeweils nur untereinander gekoppelt sind, also ohne eine Existenz des zentralen Servers SE, in keinster Weise ein. Auch in diesem Falle kann das Verfahren ohne Veränderungen in den einzelnen Verfahrensschritten durchgeführt werden.

Die im vorigen beschriebene synchrone gekoppelte Zusammenarbeit ist dann möglich, wenn alle Rechner Ri entweder direkt miteinander und/oder über den Server SE miteinander gekoppelt sind und die einzelnen Änderungen, d.h. die Nachrichten über Änderungen an den Dateikopien DKi, die jeweils in den Speichern SPi der jeweiligen Rechner Ri gespeichert sind, sofort an alle anderen Rechner Ri übertragen wird in der gleichen zeitlichen Reihenfolge wie die durchgeführten Änderungen.

Die abgekoppelte Zusammenarbeit entsteht in dem Moment, wenn für einen der Rechner Ri die Verbindung zu den anderen Rechnern Ri unterbrochen wird, und über eine beliebig lange Zeit Änderungen an den Datensätzen der Dateikopie Dki, die sich auf dem abgekoppelten Rechner Ri befindet, durchgeführt werden. Nachdem mindestens ein Rechner Ri aus der gemeinsamen Arbeitsumgebung abgekoppelt wurde und dann in den Dateikopien DKi Änderungen vorgenommen wurden, wird der jeweilige Rechner Ri wieder in die gemeinsame Arbeitsumgebung angekoppelt.

Das Verfahren beschränkt sich jedoch nicht nur auf den Fall, daß jeweils nur ein einziger Rechner abgekoppelt ist, sondern es ist ebenso vorgesehen, daß mehrere Rechner zu einer bestimmten Zeit abgekoppelt sein können.

Bei der Ankopplung der bzw. des jeweiligen Rechners Ri in die gemeinsame Arbeitsumgebung tritt nunmehr das Problem auf, daß die Datensätze der Dateikopie DKi des jeweils wieder angekoppelten Rechners Ri unterschiedlich ist, verglichen mit den Datensätzen der ursprünglichen Datei D bzw. den anderen Dateikopien DKi. Zur Ermittlung einer Datei, die nunmehr für alle, auch für den wiederangekoppelten Rechner Ri gilt, also zur Ermittlung von konsistenten Datensätzen und einer gleichen Struktur der Datensätze, müssen die unterschiedlichen Dateikopien DKi miteinander abgeglichen werden.

Bei dem Abgleich der Dateikopien DKi werden Inkonsistenzen der Datensätze bzw. der Struktur der Datei ermittelt. Diese sogenannte Konflikterkennung kann auf unterschiedliche Weise durchgeführt werden, beispielsweise durch einen kompletten Vergleich der Datensätze der sich unterscheidenden Dateikopien DKi. Da dies jedoch sehr aufwendig ist, wird in dem erfindungsgemäßen Verfahren eine alternative Vorgehensweise gewählt.

Die Datensätze werden mindestestens einem Informationsraum IU zugeordnet 802. In Figur 6 sind beispielsweise ein erster Informationsraum SIU1, ein zweiter Informationsraum PRIU1, ein dritter Informationsraum PRIU2 und ein vierter Informationsraum PIU1 dargestellt (vgl. Figur 8).

Mindestens einem Informationsraum IU wird jeweils eine Informationsraum-Protokolldatei IUPDj zugeordnet 803, wobei ein Index j jede Informationsraum-Protokolldatei IUPDj kennzeichnet und eine natürliche Zahl ist. In den Informationsraum-Protokolldateien IUPDj werden Änderungen an Datensätzen gespeichert, die sich in dem jeweiligen Informationsraum IU befinden.

Ferner wird ein Raummanager RM vorgesehen, mit dem die Informationsräume und die Informationsraum-Protokolldateien IUPDj verwaltet werden 804. Aufgabe des Raummanager RM ist beispielsweise die Realisierung einer Zugriffskontrolle bei Änderungsoperationen auf Datensätze, die sich in den Informationsräumen befinden. In diesem Zusammenhang können Änderungsoperationen an den Datensätzen des mindestens einen Informationsraums IU beispielsweise Änderungen der Zugriffsrechte für Benutzer auf Datensätze des mindestens einen Informationraums IU sein oder Löschen bzw. Hinzufügen von Datensätzen aus bzw. in den mindestens einen Informationsraum IU.

Der Raummanager RM ist auf allen Rechnern in gleicher Weise vorhanden. Dem Raummanager RM werden an den Informationsräumen IU vorgenommene Änderungsoperationen mit Hilfe von Nachrichten gemeldet und in der Informationsraum-Protokolldatei IUPD, die dem Raummanager RM zugeordnet wird, gespeichert. Mit der Protokollierung werden also alle Änderungsoperationen, die sich auf gesamte Informationsräume beziehen, aufgezeichnet. Auf diese Weise ist es möglich, auch das Hinzufügen oder Löschen von Informationsräumen IU bei einem im weiteren beschriebenen Abgleich zu berücksichtigen, automatisiert bzw. teilautomatisiert anhand der Raummanager-Protokolldatei. Dadurch wird die Erkennung und die Behebung von Inkonsistenzen zu allgemein verfügbaren Informationsraumobjekten auf Operationsbasis möglich.

In einer Weiterbildung des Verfahrens wird ein Vorschlag für einen Abgleich von geänderten Datensätzen erittelt. Dazu wird beispielsweise einfach der Inhalt der Informationsraum-Protokolldatei IUPD zur Bildung der Vorschläge verwendet.

Den Benutzern an den jeweiligen Rechnern, die die Protokolldateien PDi gespeichert haben, wird der jeweilige Änderungsvorschlag unterbreitet. Dieser kann beispielsweise die Übernahme einer durchgeführten Änderung in einem Informationsraum IU sein.

Anschließend wird über diesen Vorschlag von den Benutzern entschieden. Stimmen die Benutzer der vorgeschlagenen Änderung zu, so wird der Vorschlag in Form einer Änderung in der Datei und allen 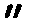 angeschlossenen" Dateikopien DKi durchgeführt. Können sich die Benutzer nicht auf eine Übernahme des Vorschlags einigen, kann nun in einer Weiterbildung des Verfahrens vorgeschlagen werden, eine frühere, konsistente Struktur von Datensätzen als neue, gemeinsame Datei D wiederzuverwenden.

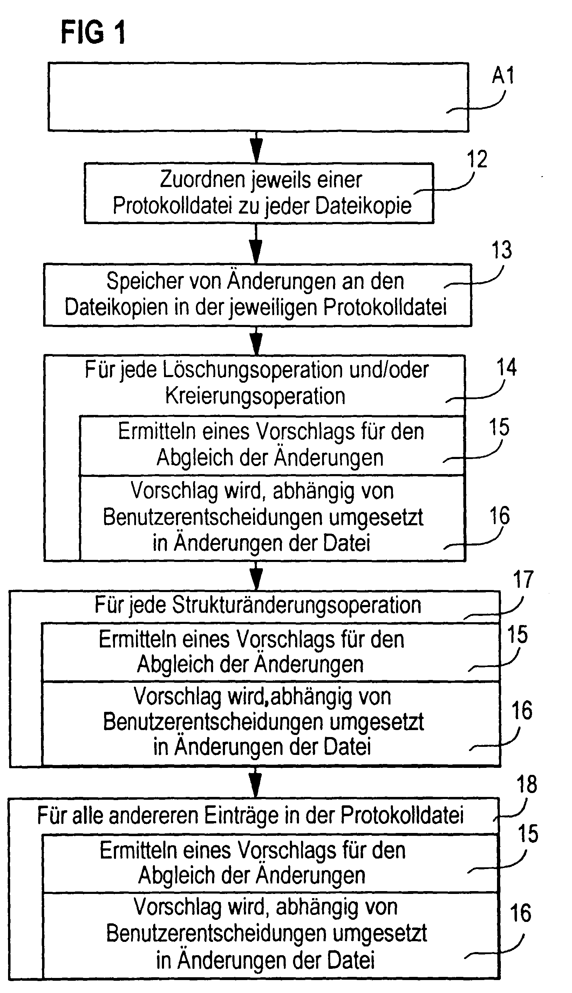

In einer Ausgestaltung des Verfahrens wird jeder Dateikopie DKi eine Protokolldatei PDi zugeordnet 12, in der alle Änderungen, die an der Dateikopie DKi vorgenommen werden, gespeichert werden 13 (vgl. Figur 1). Der Abgleich findet dann anhand eines Vergleichs der unterschiedlichen Protokolldateien PDi statt. Dieses Vorgehen ist in [3] beschrieben.

Eine gemeinsame Idee, die vielen Weiterbildungen des Verfahrens zugrunde liegt, ist darin zu sehen, den Vergleich der Protokolldateien PDi in einer Weise durchzuführen, daß unnötige Abgleiche vermieden werden. Der Bedeutung des Begriffs unnötig in diesem Zusammenhang wird noch im weiteren detaillierter erläutert.

Diese Idee führt beispielsweise dazu, daß das Verfahren zu einer 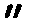 Top-Down"-Vorgehensweise bei der Bearbeitung eines hierarchischen Datenbaumes führt. Damit ist das Ziel einer Konfliktlösung zu erreichen auf der höchstmöglichen Granularitätsstufe und der höchstmöglichen Hierarchiestufe des Datenbaums.

Es wird bei dem erfindungsgemäßen Verfahren jeweils einer Dateikopie DKi, die in einem Speicher SPi eines Rechners Ri gespeichert ist, eine Protokolldatei PDi zugeordnet 12. In jeder Protokolldatei PDi werden alle Änderungen an der Dateikopie DKi, in der Protokolldatei PDi, die der jeweiligen Dateikopie DKi zugeordnet ist, gespeichert 13.

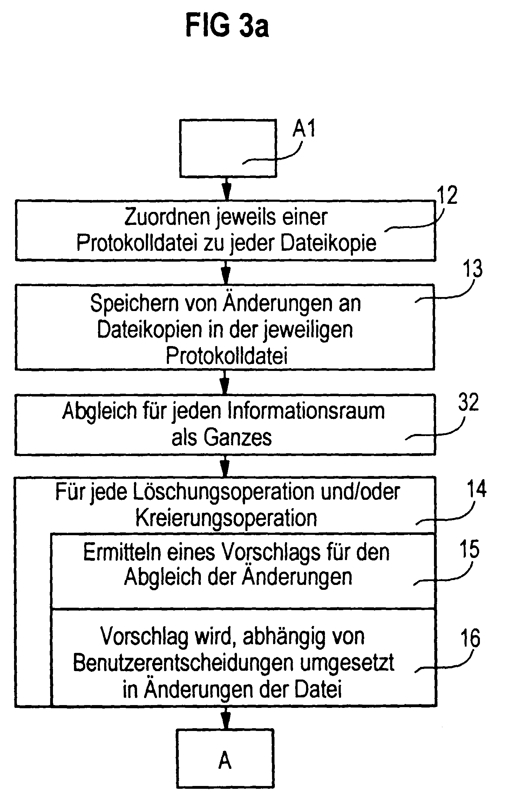

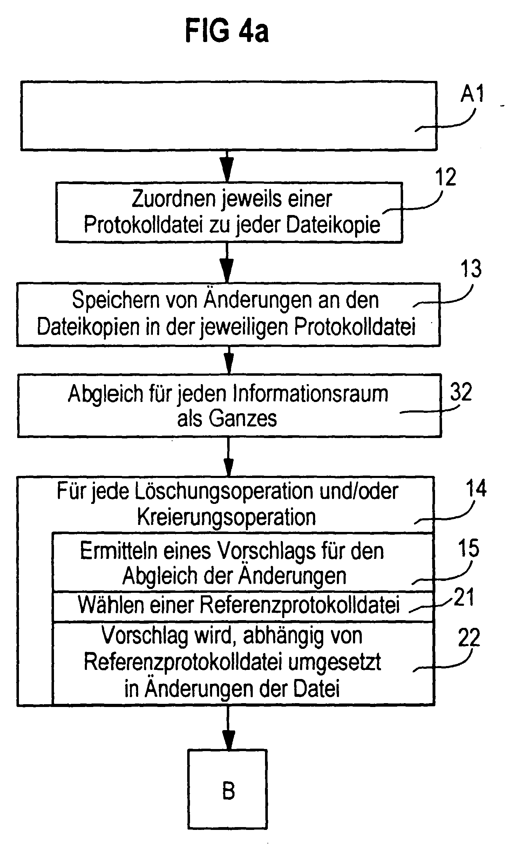

Diese Schritte 11 bis 13 sind in allen Weiterbildungen des Verfahrens äquivalent, mit dem Unterschied, daß bei den Verfahren gemäß Patentanspruch 8 und Patentanspruch 8 eine hierarchische Datenbankstruktur der Datei vorausgesetzt wird 30 (vgl. Figuren 3a und 4a).

Änderungen an den Dateikopien DKi, also an den Datensätzen der einzelnen Dateikopien DKi können durch unterschiedliche Änderungsoperationen erfolgen.

In diesen Ausführungsbeispielen wird beispielhaft von fünf unterschiedlichen Änderungsoperationen ausgegangen. Weitere Änderungsoperationen sind dem Fachmann bekannt und können ohne weiteres in dem erfindungsgemäßen Verfahren berücksichtigt werden.

Diese fünf Änderungsoperationen sind die folgenden:
- Kreierungsoperationen von Datensätzen (create object): die Kreierungsoperationen fügen einen Datensatz, der eindeutig durch einen Datensatzidentikator gekennzeichnet wird, in das Netz der Datensätze, also in die Datei D, ein;
- Löschungsoperationen von Datensätzen (delete object): die Löschungsoperationen löschen das jeweils durch den angegebenen Datensatzidentikator eindeutig in der Datei D gekennzeichneten Datensatz aus dem Netz aller Datensätze, also aus der Datei D; zusätzlich werden durch die Löschungsoperationen alle hierarchisch unter dem gelöschten Datensatz angeordneten Datensätze ebenso gelöscht; ferner werden ebenso alle hierarchischen Kopplungen P als auch alle Sekundärkopplungen S, die sich auf den gelöschten Datensatz beziehen, gelöscht;
- Strukturänderungsoperationen (create link, delete link): die Strukturänderungsoperationen kreieren bzw. löschen hierarchische Kopplungen P und/oder Sekundärkopplungen S zwischen eindeutig durch Datensatzidentikatoren angegebenen Datensätzen;
- Attributänderungsoperationen (change attribute): die Attributänderungsoperationen dienen der Änderung einzelner Attribute der Datensätze.

In dem ersten Ausführungsbeispiel wird nun die Reihenfolge der Bearbeitung der in den Protokolldateien PDi gespeicherten Änderungsoperationen in folgender Weise festgelegt (vgl. Figur 1). Zuerst werden alle Löschungsoperationen oder alle Kreierungsoperationen miteinander verglichen 14.

Der Abgleich erfolgt durch Ermittlung eines Vorschlags für den Abgleich 15. Dazu werden beispielsweise einfach die Inhalte der einzelnen Protokolldateien PDi, die abgeglichen werden sollen, miteinander verglichen.

Ist nun ein Konflikt zwischen den mindestens zwei zu vergleichenden Protokolldateien PDi erkannt worden, so wird den Benutzern, die an den jeweiligen Rechnern, die die Protokolldateien PDi gespeichert haben, der jeweilige Änderungsvorschlag unterbreitet. Dieser kann beispielsweise die Übernahme eines in einer abgekoppelten Dateikopie DKi generierten Datensatzes in die gesamte Datei, und somit in alle Dateikopien DKi oder auch der umgekehrte Fall des Löschens eines Datensatzes aus allen Dateikopien DKi durch Abgleich mit dem mindestens einen neuen angekoppelten Rechner Ri und dessen Protokolldatei PDi sein.

In dieser Weiterbildung des Verfahrens wird über diesen Vorschlag von den Benutzern entschieden.

Stimmen die Benutzer der vorgeschlagenen Änderung zu, so wird der Vorschlag in Form einer Änderung in der Datei und allen 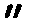 angeschlossenen" Dateikopien DKi durchgeführt 16. Können sich die Benutzer nicht auf eine Übernahme des Vorschlags einigen, kann nun in einer Weiterbildung des Verfahrens vorgeschlagen werden, eine frühere, konsistente Struktur von Datensätzen als neue, gemeinsame Datei D wiederzuverwenden.

Auch über diesen Vorschlag können dann die jeweiligen Benutzer selbständig entscheiden.

Für den Fall, daß sich beide Benutzer dazu entschließen, den Abgleich gemäß dem Vorschlag durchzuführen, werden bei den Löschoperationen sowie den Kreierungsoperationen gleichzeitig auch die jeweiligen Kopplungen P, S, die als Parameter bei den Löschoperationen (delete) bzw. den Kreierungsoperationen (create) angegeben sind, mit in der schließlich durchgeführten Änderung aller Dateikopien DKi durch den Rechner berücksichtigt.

Diese Art des Vorgehens weist den erheblichen Vorteil auf, daß alle Strukturänderungsoperationen sowie alle Attributänderungsoperationen, die in den einzelnen Protokolldateien PDi gespeichert wurden und sich beispielsweise auf Datensätze beziehen, die durch Löschungsoperationen schon gänzlich aus der gesamten Datenstruktur gelöscht wurden, nicht mehr berücksichtigt werden müssen. Somit werden erfindungsgemäß unnötige zusätzliche Abgleiche vermieden, was zu einer erheblich schnelleren Durchführung des gesamten Abgleichs durch den Rechner führt.

Nachdem alle Löschungsoperationen und alle Kreierungsoperationen 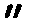 bearbeitet" wurden, werden in weiteren Schritten 17 iterativ alle gespeicherten Strukturänderungsoperationen, die sich noch nicht erledigt haben durch die bearbeiteten Löschungsoperationen (delete) oder Kreierungsoperationen (create), durchgeführt.

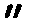 Erledigt" bedeutet in diesem Zusammenhang wie im vorigen beschrieben, daß sich die Strukturänderungsoperationen beispielsweise auf Datensätze beziehen, die gar nicht mehr existent sind, da sie beispielsweise durch Löschungsoperationen schon aus der Datei D entfernt wurden.

Auch das Bearbeiten der Strukturänderungsoperationen vor Berücksichtigung der Attributänderungsoperationen führt zu einer Verringerung des Rechenzeitbedarfs des Verfahrens.

Sind auch alle Strukturänderungsoperationen durch Ermitteln eines Vorschlags für den Abgleich 15 sowie der Umsetzung des Vorschlags eventueller Änderungen 16 durchgeführt worden, erfolgt nun die Berücksichtigung der verbliebenen 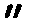 relevanten" Attributänderungsoperationen, die in den Protokolldateien PDi gespeichert sind 18. Die Bearbeitung der Attributänderungsoperationen erfolgt ebenso durch Ermitteln des Vorschlags für den Abgleich 15 und der Umsetzung eventuell in Änderungen der Datei 16.

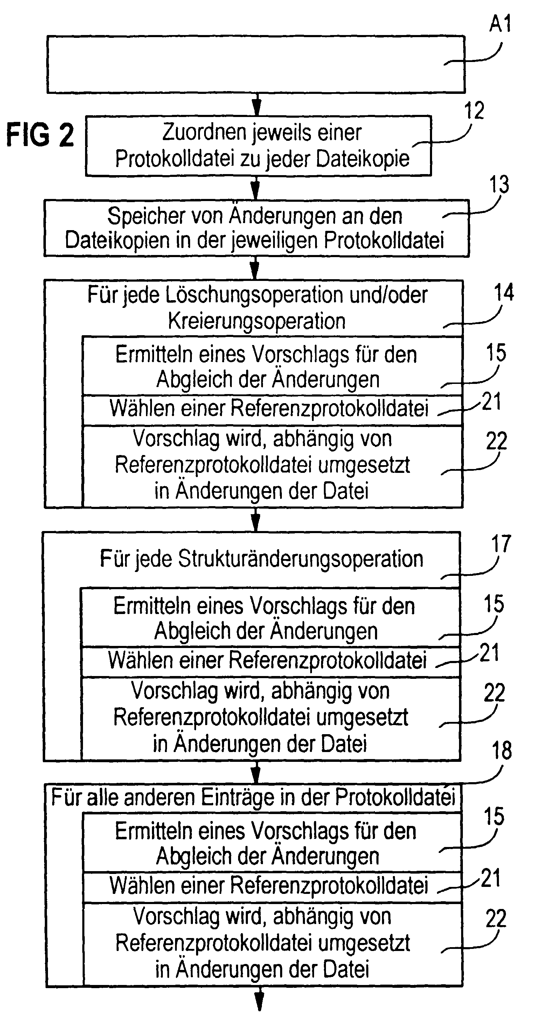

Eine weitere Ausgestaltung beschreibt ein Verfahren, das sich nur in geringer Weise von dem im vorigen beschriebenen Verfahren unterscheidet. Der Unterschied zwischen dem oben beschriebenen Verfahren zu dem ersten ist darin zu sehen, daß zwar die Reihenfolge für den Abgleich entsprechend dem in dem oben beschriebenen Verfahren ist, jedoch nicht mehr wie in dem oben beschriebenen Verfahren der jeweils ermittelte Vorschlag für den Abgleich abhängig von Benutzerentscheidungen in Änderungen der Datei umgesetzt wird 16, sondern, wie in Figur 2 beschrieben, anstatt dieses Verfahrensschritts eine Referenzprotokolldatei aus den Protokolldateien PDi ausgewählt wird 21.

Die Änderungen der Datei D werden nunmehr bei Konflikterkennung zwischen der Referenzprotokolldatei und den anderen Protokolldateien PDi in der Weise ermittelt, daß jeweils die Änderung, die in der Referenzprotokolldatei gespeichert ist, oder, falls nur eine Änderung in der Protokolldatei PDi gespeichert ist und in der Referenzprotokolldatei keine Änderung gespeichert ist, jeweils die Entscheidung aus der Referenzprotokolldatei resultiert, also übernommen wird 22 (vgl. Figur 2).

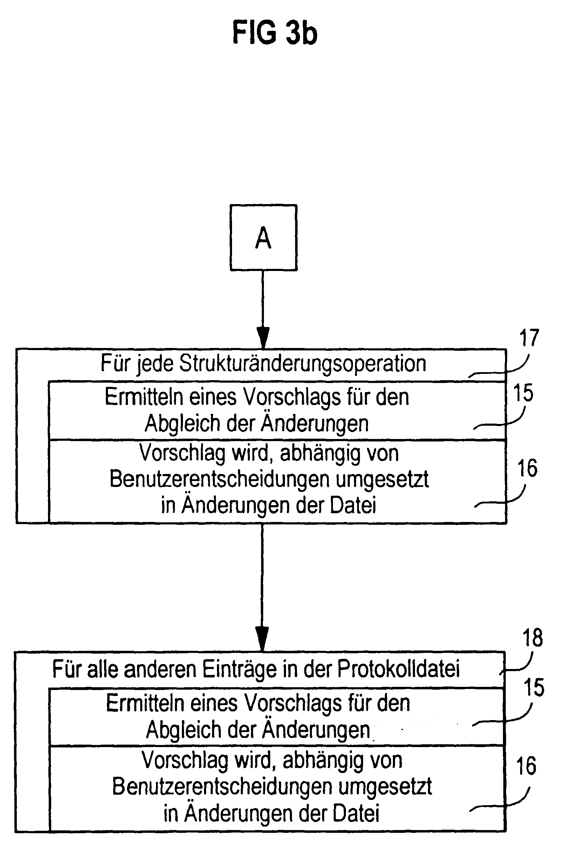

In den Figuren 3a und 3b ist ein Ablaufdiagramm, das ein drittes Ausführungsbeispiel des erfindungsgemäßen Verfahrens beschreibt, dargestellt.

Wie im vorigen beschrieben wurde, setzt dieses Ausführungsbeispiel auf einer Datei auf, deren Datensätze in Form einer hierarchischen Datenbankstruktur miteinander verknüpft sind - 30. Dies bedeutet, daß in der Datenbankstruktur ausschließlich hierarchische Kopplungen P auftreten (vgl. Figur 6).

In einer weiteren Ausgestaltung werden wiederum jeder Dateikopie DKi eine Protokolldatei PDi zugeordnet 12 und alle Änderungen in der jeweiligen Protokolldatei PDi gespeichert 13.

Der Abgleich erfolgt nun in diesem Ausführungsbeispiel in der Weise, daß zuerst versucht wird, auf oberster hierarchischer Ebene, also auf der jeweiligen Ebene der Informationsräume IU einen Abgleich als Ganzes zu erreichen 32 (vgl. Figur 3).

Es wird also untersucht, ob Konflikte zwischen den Informationsräumen IU entstanden sind und entsprechend wird ein Vorschlag ermittelt, einen Informationsraum IU als Ganzes in die abzugleichende Datei D zu übernehmen. Der Vorschlag wird wiederum den Benutzern unterbreitet und, falls sich die Benutzer einigen auf einen der Konfliktinformationsräume als komplett neu zu verwendenden Informationsraum IU in der Datei D, so wird der jeweilige Informationsraum IU als Ganzes in die Datei kopiert, also der alte Informationsraum eventuell als Ganzes ersetzt.

Durch dieses 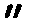 Top-Down"-Vorgehen innerhalb der hierarchischen Datenbankstruktur werden erhebliche Einsparungen von nicht erforderlichen Abgleichen erreicht, die in bekannten Verfahren durchgeführt werden müssen.

In einer Weiterbildung des Verfahrens ist es vorgesehen, falls für einen Informationsraum IU als Ganzes keine Einigung auf Übernahme in die Datei gefunden wird, den Abgleich wiederum auf Ebene der einzelnen Änderungsen zu Datensätzen in den Informationsräumen IU durchzuführen, vorzugsweise nach dem in dem ersten Ausführungsbeispiel beschriebenen Vorgehen, also in der Reihenfolge, zuerst Löschoperationen (delete) oder Kreierungsoperationen (create) zu bearbeiten und schließlich die Strukturänderungsoperationen sowie zum Schluß die übriggebliebenen Attributänderungsoperationen.

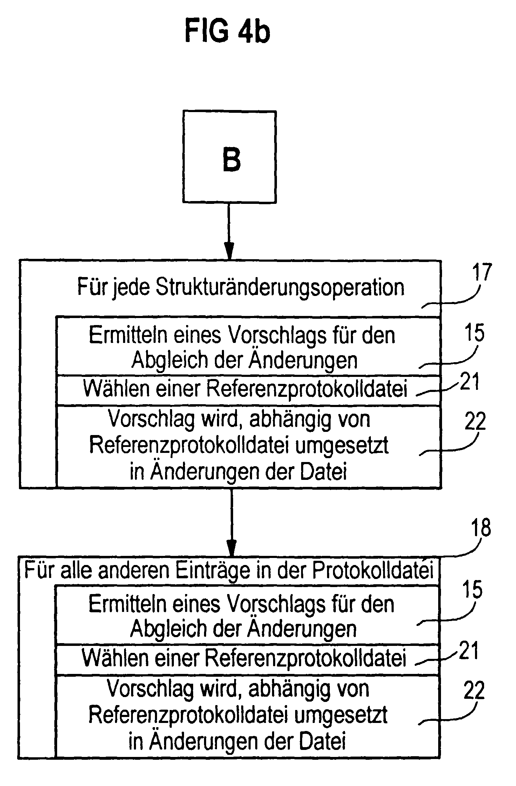

Bei einer weiteren Ausgestaltung (vgl. Figuren 4a und 4b) sind alle Schritte äquivalent zu denen der im vorigen beschriebenen Ausgestaltung, jedoch die Änderung der Datei hängt nicht von Benutzerentscheidungen ab, sondern es wird eine Referenzprotokolldatei aus den Protokolldateien PDi gewählt 41 und die Änderungen erfolgen abhängig von der Referenzprotokolldatei 42.

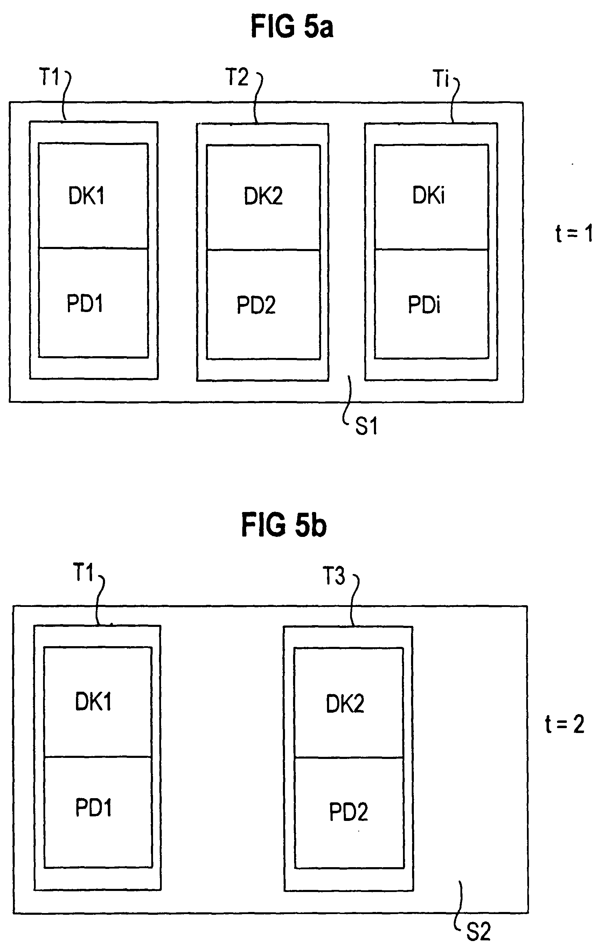

In den Figuren 5a und 5b ist eine Weiterbildung des Verfahrens für alle im vorigen beschriebenen Ausgestaltungen dargestellt.

In den Figuren 5a und 5b ist ein Beispiel von drei Teilnehmern in einer gemeinsamen Arbeitsumgebung dargestellt. Diese sind ein erster Teilnehmer T1, ein zweiter Teilnehmer T2, einem dritten Teilnehmer T3, sowie weitere Teilnehmer Ti. Die Teilnehmer T1, T2, T3 arbeiten jeweils an einem ersten Rechner R1, einem zweiten Rechner R2, einem dritten Rechner R3, sowie weiteren Rechnern Ri.

In den einzelnen Speichern SP1, SP2, SP3, SPi der Rechner R1, R2, R3, Ri sind die einzelnen Dateikopien DK1, DK2, DK3, DKi sowie die diesen zugeordneten Protokolldateien PD1, PD2, PD3, PDi gespeichert. Dies ist die Situation zu einem ersten Zeitpunkt t=1.

Diese Situation wird eindeutig gekennzeichnet durch eine erste Sequenznummer S1. Alle Änderungen, die in den Protokolldateien PDi gespeichert werden, werden in dieser Weiterbildung des erfindungsgemäßen Verfahrens unter der ersten Sequenznummer S1 zusammengefaßt.

Zu einem zweiten Zeitpunkt t=2 sind in der gemeinsamen Arbeitsumgebung nur noch der erste Teilnehmer T1 sowie der dritte Teilnehmer T3 vorhanden. Der zweite Teilnehmer T2 ist zu diesem Zeitpunkt von der gemeinsamen Arbeitsumgebung abgekoppelt.

Durch diese Abkopplung wird die neue Zusammensetzung der gemeinsamen Arbeitsumgebung mit einer zweiten Sequenznummer S2 bezeichnet, das heißt alle Änderungen in den Protokolldateien PD1 und PD3 werden ab der Abkopplung des zweiten Teilnehmers T2 mit der weiteren Sequenznummer S2 gekennzeichnet.

Die Figuren 5a und 5b sollen folgenden allgemeinen Fall verdeutlichen. Jede Änderung der Zusammensetzung einer gemeinsamen Arbeitsumgebung durch Abkoppeln oder Ankoppeln eines Teilnehmers wird durch eine eindeutige Sequenznummer gekennzeichnet. Dies vereinfacht die Vorgehensweise zum Abgleich der einzelnen Protokolldateien und somit der Dateikopien DKi erheblich. Dies bedeutet in anderen Worten, daß jeweils eine neue Sequenz generiert wird, wenn sich mindestens ein Teilnehmer ankoppelt oder mindestens ein Teilnehmer abkoppelt aus der gemeinsamen Arbeitsumgebung. Die generierte Sequenz ist dann auch die aktuelle Sequenz und alle während dieser Sequenz auftretenden und zu speichernden Änderungsoperationen werden dieser Sequenz zugeordnet und unter dieser Sequenz gespeichert.

In einer Weiterbildung der erfindungsgemäßen Verfahren ist es vorgesehen, Klammerkonstruktionen zur Definition zusammengesetzter Änderungsoperationen bei der Vorgehensweise zum Abgleich der Dateikopien DKi zu berücksichtigen.

Durch Klammerkonstruktionen werden 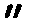 atomare" Änderungsoperationen zu einer Folge von Änderungsoperationen zusammengefaßt. Dadurch können zusammengesetzte Änderungsoperationen definiert werden, die bei einem Vergleich der Protokolldateien PDi als eine zusammengesetzte Änderungsoperation behandelt wird.

Damit wird es auch möglich, eine Sequenz von 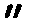 atomaren" Änderungsoperationen als eine komplexe Änderungsoperation ohne Unterbrechung durch andere Änderungsoperationen auszuführen.

Hierzu ist die Verwendung von systemweit eindeutig identifizierbaren Klammernachrichten notwendig, mindestens einem Klammernachrichtenpaar, welches eine KlammerAuf-Nachricht und eine KlammerZu-Nachricht aufweist. Die Folge von Änderungsoperationen, zwischen deren Ausführung keine Ausführung einer anderen Änderungsoperation, die nicht in der Klammerkonstruktion ist, zulässig ist ergibt sich aus jedem Klammernachrichtenpaar eindeutig zugeordneten Nachrichten-Identikatoren für jede Änderungsoperation.

Die Auswertung der jeweiligen Klammerung von Änderungsoperationen mit mindestens einem Klammernachrichtenpaar kann sowohl bei dem zentralen Server SE als auch bei den Rechnern Ri erfolgen.

Für den Fall, daß die Auswertung in dem zentralen Verteilungsrechner durchgeführt wird, werden nach dem Empfang einer KlammerAuf-Nachricht von einem Rechner Ri alle weiteren zu dieser KlammerAuf-Nachricht gehörenden Änderungsoperationen und die KlammerAuf-Nachricht selbst und weitere Klammernachrichten an die alle 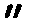 angekoppelten" Rechner Ri weitergesendet. Alle anderen Änderungsoperationen werden von dem zentralen Verteilungsrechner zurückgehalten, also nicht an die Rechner Ri weitergesendet, bis die zu der KlammerAuf-Nachricht gehörende KlammerZu-Nachricht von dem zentralen Verteilungsrechner empfangen wird.

Für den Fall jedoch, daß die Auswertung in den Rechnern Ri durchgeführt wird, werden nach Empfang einer KlammerAuf-Nachricht alle zu dieser KlammerAuf-Nachricht gehörenden Änderungsoperationen sofort in der entsprechenden Reihenfolge, die beispielsweise durch Klammer-Sequenznummern bestimmt wird, die jede Klammernachricht aufweist, durchgeführt werden. Alle anderen Nachrichten, also Änderungsoperationen werden zwar gespeichert, aber nicht ausgeführt, bis die entsprechende KlammerZu-Nachricht empfangen wurde.

Auf diese Weise wird gewährleistet, daß eine geklammerte Folge von 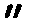 atomaren" Änderungsoperationen als eine komplexe Änderungsoperation, ohne eine Unterbrechung durch andere, nicht in die Klammer gehörenden Änderungsoperationen, ausgeführt wird.

Auch eine Verschachtelung mehrer Klammernachrichten ist auf einfache Weise möglich.

In einer Weiterbildung der Verfahren ist es vorgesehen, die Semantik der einzelnen Änderungsoperationen mit zu berücksichtigen.

Dies kann beispielswese dadurch erfolgen, daß anhand wählbarer Vorgaben Änderungsoperationen Vorrang besitzen, die während eines bestimmten vorgebbaren Zeitraums ausgeführt wurden.

Auch eine Berücksichtigung dadurch, daß anhand wählbarer Vorgaben Änderungsoperationen Vorrang besitzen, die sich auf bestimmte vorgebbare Datensätze und/oder Informationsräume IU beziehen, ist in einer Weiterbildung der Verfahren vorgesehen.

Weitere vorgesehene zu berücksichtigende semantische Kriterien zur Bearbeitungsreihenfolge der Änderungsoperationen sind:
- der die Änderungsoperation generierende Nutzer;
- der Rechner, von dem aus die Änderungsoperation erzeugt wurde;
- die Objektklasse des veränderten Objektes;
- der Eigentümer des die Änderungsoperation betreffenden Objektes;
- die Rolle des Objekteigentümers innerhalb der Gruppe, die auf das gemeinsame Objekt Zugriff hat, das durch die Änderungsoperation beeinflußt wurde;
- die Rolle des die Änderungsoperation generierenden Nutzers innerhalb der Gruppe, die auf das gemeinsame Objekt Zugriff hat, das durch die Änderungsoperation beeinflußt wurde;
- die Anzahl der Dateikopien, die bei einer Reintegration berücksichtigt werden, hierbei sowohl die Anzahl der wieder neu 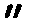 angekoppelten" Dateikopien als auch die Anzahl der bei der Ankopplung sich schon in der Arbeitsgruppe befindenden Dateikopien;
- die Reihenfolge von Änderungen, die jeweils ein bestimmter Nutzer vorgenommen hat;
- die Anzahl von Änderungen, die an einer Dateikopie vorgenommen wurden, während diese Dateikopie 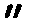 abgekoppelt" war.

In diesem Dokument wurden folgende Veröffentlichungen zitiert:
[1] S. Davidson et al, Consistency in Partitioned Networks, Computing Surveys, Vol. 17, No. 3, ACM 0360-0300/85/0900-0341, S. 341 - 370, September 1985
[2] J. Munson et al, A Flexible Object Merging Framework, University of North Carolina-Chapel Hill, CSCW 94-10/94, ACM 0-89791-689-1/94/0010, S. 231 - 242, 1994
[3] M. Kolland et al, Information Sharing in Collaborative Environments, Proceedidngs of the third workshop on enabling technologys: In Prastructure for collaborative Enterprises, Morgantown, West Virginia, IEEE, S. 140 - 154, 17. bis 19. April 1994

## Patentansprüche

1. Verfahren zur rechnergestützten Verwaltung mehrerer, in mindestens einem Rechner (Ri) gespeicherten Dateikopien (DKi) einer gespeicherten Datei (D),
- bei dem die gespeicherte Datei (D) Datensätze aufweist, die in Form einer Datenbankstruktur miteinander verknüpft sind (801),
- bei dem die Datensätze mindestens einem Informationsraum (IU) zugeordnet werden (802),
- bei dem eine Informationsraum-Protokolldatei (IUPDj) mindestens einem Informationsraum (IU) zugeordnet wird (803), und
- bei dem ein Raummanager (RM) vorgesehen ist zur Verwaltung der einzelnen Informationsräume (804).

2. Verfahren nach Anspruch 1,
- bei dem vorgenommene Änderungen an dem mindestens einen Informationsraum (IU) in der dem Informationsraum (IU) zugeordneten Informationsraum-Protokolldatei (IUPDj) gespeichert werden,
- bei dem Vorschläge für den Abgleich der Dateikopien (DKi) ermittelt werden anhand der jeweiligen Informationsraum-Protokolldatei (IUPDj),
- bei dem die Vorschläge umgesetzt werden in Änderungen der Datei (D) und der Dateikopien (DKi), abhängig von Benutzerentscheidungen.

3. Verfahren nach Anspruch 1 oder 2,
- bei dem jeder Dateikopie (DKi) eine Protokolldatei (PDi) zugeordnet wird (12),
- bei dem vorgenommene Änderungen an den Dateikopien (DKi) in der der jeweiligen Dateikopie (DKi), an der eine Änderung durchgeführt wurde, zugeordneten Protokolldatei (PDi) gespeichert werden (13),
- bei dem Vorschläge für den Abgleich der Dateikopien (DKi) nach Abgleich des mindestens einen Informationsraums (IU) ermittelt werden anhand der Protokolldateien (PDi) (15), wobei der Abgleich jeweils begonnen wird mit dem Vergleich von in den Protokolldateien (PDi) gespeicherten Löschungsoperationen (delete) oder Kreierungsoperationen (create) von Datensätzen der Datei (D) oder Dateikopien (DKi) (14), und
- bei dem die Vorschläge umgesetzt werden in Änderungen der Datei (D) und der Dateikopien (DKi), abhängig von Benutzerentscheidungen (16).

4. Verfahren nach Anspruch 1,
- bei dem jeder Dateikopie (DKi) eine Protokolldatei (PDi) zugeordnet wird (12),
- bei dem vorgenommene Änderungen an den Dateikopien (DKi) in der der jeweiligen Dateikopie (DKi), an der eine Änderung durchgeführt wurde, zugeordneten Protokolldatei (PDi) gespeichert werden (13),
- bei dem Vorschläge für den Abgleich der Dateikopien (DKi) nach Abgleich des mindestens einen Informationsraums (IU) ermittelt werden anhand der Protokolldateien (PDi) (15), wobei der Abgleich begonnen wird mit dem Vergleich von in den Protokolldateien (PDi) gespeicherten Löschungsoperationen (delete) oder Kreierungsoperationen (create) von Datensätzen der Datei (D) oder Dateikopien (DKi) (14),
- bei dem aus den Protokolldateien (PDi) für den Vergleich vorgebbarer Löschungsoperationen (delete) oder Kreierungsoperationen (create) jeweils mindestens eine Referenzprotokolldatei gewählt wird (21), und
- bei dem die Vorschläge umgesetzt werden in Änderungen der Datei (D) und der Dateikopien (DKi), abhängig von der Referenzprotokolldatei (22).

5. Verfahren nach einem der Ansprüche 1 bis 4,
bei dem nach dem Abgleich von in den Protokolldateien (PDi) gespeicherten Löschungsoperationen (delete) und/oder Kreierungsoperationen (create) von Datensätzen der Datei (D) oder Dateikopien (DKi) ein Abgleich von in den Protokolldateien (PDi) gespeicherten Strukturveränderungsoperationen (createLink, deleteLink) erfolgt.

6. Verfahren nach einem der Anprüche 1 bis 5,
bei dem die Datensätze in Form einer hierarchischen Datenbankstruktur miteinander verknüpft sind (30).

7. Verfahren nach Anspruch 6,
bei dem die Reihenfolge der berücksichtigten Löschungsoperationen (delete) oder Kreierungsoperationen (create) von Datensätzen der Datei (D) oder Dateikopien (DKi) durch die Position der Datensätze in der hierarchischen Datenbankstruktur festgelegt wird, wobei der Abgleich erfolgt beginnend mit Änderungsoperationen an einem Wurzeldatensatz der Datei (D) fortschreitend zu Änderungsoperationen an Datensätzen, die jeweils abhängig von schon bearbeiteten Datensätze sind.

8. Verfahren nach Anspruch 1,
- bei dem jeder Dateikopie (DKi) eine Protokolldatei (PDi) zugeordnet wird (12),
- bei dem vorgenommene Änderungen an den Dateikopien (DKi) in der der jeweiligen Dateikopie(DKi), an der eine Änderung durchgeführt wurde, zugeordneten Protokolldatei (PDi) gespeichert werden (13),
- bei dem Vorschläge für den Abgleich der Dateikopien (DKi) nach Abgleich des mindestens einen Informationsraums (IU) ermittelt werden anhand der Protokolldateien (PDi) (15), wobei der Abgleich begonnen wird mit dem Vergleich von ganzen Informationsräumen (IU) (32),
- bei dem die Vorschläge umgesetzt werden in Änderungen der Datei (D) und der Dateikopien (DKi), abhängig von Benutzerentscheidungen (16).

9. Verfahren nach Anspruch 1,
- bei dem jeder Dateikopie (DKi) eine Protokolldatei (PDi) zugeordnet wird (12),
- bei dem vorgenommene Änderungen an den Dateikopien (DKi) in der der jeweiligen Dateikopie (DKi), an der eine Änderung durchgeführt wurde, zugeordneten Protokolldatei (PDi) gespeichert werden (13),
- bei dem Vorschläge für den Abgleich der unabhängigen Dateikopien nach Abgleich des mindestens einen Informationsraums (IU) ermittelt werden anhand der Protokolldateien (15), wobei der Abgleich begonnen wird mit dem Vergleich von ganzen Informationsräumen (IU) (32),
- bei dem aus den Protokolldateien (PDi) für den Vergleich vorgebbarer Löschungsoperationen (delete) und/oder Kreierungsoperationen (create) jeweils mindestens eine Referenzprotokolldatei gewählt wird (21), und
- bei dem die Vorschläge umgesetzt werden in Änderungen der Datei und der Dateikopien, abhängig von Änderungen in der Referenzprotokolldatei (22).

10. Verfahren nach Anspruch 8 oder 9,
bei dem die Reihenfolge berücksichtigter Änderungsoperationen von Datensätzen innerhalb jedes Informationsraumes (IU) der Datei (D) oder Dateikopien (DKi) durch die Position der Datensätze in der hierarchischen Datenbankstruktur festgelegt wird, wobei der Abgleich erfolgt beginnend mit Änderungsoperationen an einem Wurzeldatensatz der Datei (D) fortschreitend zu Änderungsoperationen an Datensätzen, die jeweils abhängig von schon bearbeiteten Datensätze sind.

11. Verfahren nach einem der Ansprüche 8 bis 10,
bei dem der Abgleich begonnen wird mit dem Abgleich von in den Protokolldateien (PDi) gespeicherten Löschoperationen (delete) und/oder Kreierungsoperationen (create) von Datensätzen der Datei (D) oder Dateikopien (DKi) in jeweils einem Informationsraum (IU) (14).

12. Verfahren nach einem der Ansprüche 8 bis 11,
bei dem nach dem Abgleich von in den Protokolldateien (PDi) gespeicherten Löschoperationen (delete) und/oder Kreierungsoperationen (create) von Datensätzen der (D) Datei oder Dateikopien (DKi) ein Abgleich von in den Protokolldateien (PDi) gespeicherten Strukturveränderungsoperationen jeweils in einem Informationsraum (IU) erfolgt (17).

13. Verwendung des Verfahren nach einem der Ansprüche 1 bis 12 in einem CSCW-System (Computer Supported Cooperative Work),
bei dem bei jeder Änderung der Zusammensetzung Teilnehmer an einer Sitzung des CSCW-Systems eine neue, mit einer eindeutigen Bezeichnung gekennzeichnete Sitzungssequenz (S1, S2) kreiert wird zur Kennzeichnung von Operationssequenzen in den Protokolldateien (PDi).

14. Verfahren nach einem der Ansprüche 1 bis 13,
bei dem bei dem Abgleich Klammerkonstrukte berücksichtigt werden, wobei die Klammerkonstrukte aus einzelnen Änderungsoperationen zusammengesetzte Operationen sind, bei deren Vergleich keine andere Änderungsoperation verglichen werden.

15. Verfahren nach einem der Ansprüche 1 bis 14,
bei dem die Semantik der Änderungsoperationen beim Vergleich der Änderungsoperationen berücksichtigt wird.

16. Verfahren nach Anspruch 15,
bei dem die Semantik dadurch berücksichtigt wird, daß anhand wählbarer Vorgaben Änderungsoperationen zeitliche Priorität beim Vergleich besitzen, die während eines bestimmten vorgebbaren Zeitraums ausgeführt wurden.

17. Verfahren nach Anspruch 16 oder 17,
bei dem die Semantik dadurch berücksichtigt wird, daß anhand wählbarer Vorgaben Änderungsoperationen zeitliche Priorität beim Vergleich besitzen, die sich auf bestimmte vorgebbare Datensätze und/oder Informationsräume (IU) beziehen.
